## Europäisches Patentamt

## European Patent Office

## Office européen des brevets

(19)

(11) Veröffentlichungsnummer: **0 321 886**
**A1**

(12) **EUROPÄISCHE PATENTANMELDUNG**

(21) Anmeldenummer: **88121167.6**

(22) Anmeldetag: **16.12.88**

(51) Int. Cl.⁴: **G11B 21/08**

(30) Priorität: **21.12.87 DE 3743391**

(43) Veröffentlichungstag der Anmeldung:
**28.06.89 Patentblatt 89/26**

(84) Benannte Vertragsstaaten:
**AT CH DE FR GB IT LI NL**

(71) Anmelder: **Siemens Aktiengesellschaft Berlin
und München**
**Wittelsbacherplatz 2**
**D-8000 München 2(DE)**

(72) Erfinder: **Etzbach, Rupert, Dipl.-Ing.**
**Ambacherstrasse 35**
**D-8000 München 71(DE)**
Erfinder: **Spengler, Werner, Dr. rer. nat.**
**Josef-Lutz-Weg 23**
**D-8000 München 70(DE)**

(54) **Verfahren zum geschwindigkeitsgeregelten Positionieren eines Schreib-/Lesekopfs in bezug auf einen rotierenden Aufzeichnungsträger.**

(57) Ausgehend von einer Dreiphasenregelanordnung, bei der eine Beschleunigungsphase (v +) eines Positioniervorganges nicht abrupt in eine Bremsphase (v-) übergeht, soll mit dem neuen Verfahren für jede Soll-Positionierdistanz (nsz) die Zeit zum Positionieren des Schreib-/Lesekopfes so klein wie möglich sein, ohne daß beim geschwindigkeitsgeregelten Positionieren während der Bremsphase größere Differenzen zwischen einer Soll-Geschwindigkeit (vs') und einer Ist-Geschwindigkeit (vi') auftreten.

Dazu wird für jede zurückzulegende Positionierdistanz des Schreib-/Lesekopfes eine Übergangsspur (NC) definiert, bei der die Bremsphase einsetzt und bei der, bis zum Erreichen dieser Spur, ein zu dieser Spur korrespondierender Soll-Geschwindigkeitswert (vsmax'), der in der gespeicherten Bremskurve (vslin) enthalten ist, zum Regeln der Ist- Geschwindigkeit in der Beschleunigungsphase herangezogen wird.

Das Verfahren wird dazu verwendet, Schreib-/Leseköpfe in einem Magnetplattenspeicher möglichst schnell zu positionieren.

FIG1

# Verfahren zum geschwindigkeitsgeregelten Positionieren eines Schreib-/Lesekopfes in bezug auf einen rotierenden Aufzeichnungsträger.

Die Erfindung bezieht sich auf ein Verfahren gemäß dem Oberbegriff des Hauptanspruches.

Geschwindigkeitsgeregelte Positionierverfahren werden in unterschiedlichen technischen Gebieten, insbesondere auch bei Schreib-/Lesevorgängen in Datenspeichern eingesetzt. Ständig wachsende Speicherkapazität läßt sich nur mit erhöhter Speicherdichte erreichen, was sich z.B. in der erhöhten Anzahl von Informationsspuren pro Datenplatte ausdrückt. Deshalb muß bei Schreib- oder Lesevorgängen ein Schreib-/Lesekopf immer genauer positioniert werden. Im Interesse einer kleinen Zugriffszeit muß jedoch der Positioniervorgang so schnell wie möglich durchgeführt werden.

So ist ein wesentliches Leistungsmerkmal eines Plattenspeichers die Zeit, die zum Positionieren der Schreib-/Leseköpfe auf eine neue Spur benötigt wird. Eine minimale Positionierzeit bedingt aber, daß der Schreib-/Lesekopf bei unterschiedlichen Positionierdistanzen zunächst auf eine maximale Geschwindigkeit beschleunigt und danach innerhalb kürzester Zeit bis zu einer Zielspur abgebremst wird. Dies läßt sich über eine geschwindigkeitsabhängige Regelung beispielsweise des Motorstromes eines Positioniermotors erreichen, der den Schreib-/Lesekopf bewegt. Um den Schreib-/Lesekopf für die verschiedenen Positionierdistanzen über der Zielspur genau und schnell zu positionieren, ist es erforderlich, den zur Verfügung stehenden maximalen Motorstrom während der Beschleunigungs- und Bremsphase gut auszunutzen, ohne jedoch dabei einen Wert zu erreichen, bei dem dann der Schreib-/Lesekopf nicht mehr über der Zielspur angehalten werden kann.

Es ist daher ein geschwindigkeitsgeregeltes Positionierverfahren üblich, bei dem die Differenz einer gemessenen Ist-Geschwindigkeit zu einer vorgegebenen Soll-Geschwindigkeit den Strom des Positioniermotors regelt. Für große Positionierdistanzen läuft dabei der Positioniervorgang in drei Phasen ab. In der ersten Phase, einer Beschleunigungsphase, wird der Schreib-/Lesekopf mit maximalem Motorstrom auf eine maximale Soll-Geschwindigkeit vmax beschleunigt. In der zweiten Phase bleibt die Ist-Geschwindigkeit des Schreib-/Lesekopfes konstant. Die dritte Phase schließlich ist eine Bremsphase, bei der die Ist-Geschwindigkeit des Schreib-/Lesekopfes einer sich ändernden Soll-Geschwindigkeit angenähert wird. Die Soll-Geschwindigkeitswerte verringern sich dabei nach einer vorgegebenen Bremskurve solange, bis auf der Zielspur die Ist-Geschwindigkeit gleich Null ist.

Der Positioniervorgang, der in der beschriebenen Weise für größere Positionierdistanzen einwandfrei abläuft, erweist sich für kleine Positionierdistanzen als problematisch. So verkürzt sich bei abnehmenden Positionierdistanzen zunächst die konstante Phase immer mehr, bis schließlich die Beschleunigungsphase unmittelbar in die Bremsphase übergeht, wobei der maximale Soll-Geschwindigkeitswert vmax nicht mehr erreicht wird. Bei einem direkten Übergang von der Beschleunigungs- in die Bremsphase muß aber die Stromrichtung im Positioniermotor bei hoher Leistung unmittelbar umgepolt werden. Die technisch bedingte begrenzte Stromanstiegsgeschwindigkeit, sowie Einschwingvorgänge aufgrund der Unstetigkeitsstelle der Regelcharakteristik haben größere Differenzen voll Soll- und Ist-Geschwindigkeit zur Folge. Bei einer für alle Positionierdistanzen identischen Bremskurve kann das Nachziehverhalten der Regelung den Motorstrom in die Sättigung steuern und dann ein kontrolliertes Positionieren des Schreib-/Lesekopfes vereiteln.

Um dieses Problem zu vermeiden, könnte man eine einzige Bremskurve mit verminderter Bremsleistung verwenden. Die Bremskurve muß dann so ausgelegt sein, daß bei kürzeren Positionierdistanzen keine Sättigung des Motorstroms in der Bremsphase eintritt. Nachteilig ist dabei jedoch die verminderte Bremsleistung bei längeren Positionierdistanzen und eine damit sich zwangsläufig ergebende Erhöhung der Positionierzeit.

Eine weitere Möglichkeit bestünde darin, mehrere Bremskurven für unterschiedliche Positionierdistanzen zu verwenden. Dieses Verfahren wäre jedoch systematisch bedingt aufwendig. Je nach Positionierdistanz wäre die für diese Distanz geeignete Bremskurve auszuwählen. Ein weiterer Nachteil wäre der erhöhte Speicherplatzbedarf für die Bremskurven.

Aus der DE-C 25 01 792 ist weiterhin eine Anordnung zum Regeln der Verschiebung und Positionierung eines translatorisch beweglichen Systems bekannt, die auf einer Zweiphasenregelanordnung beruht. Eine Umkehrsteuereinrichtung erlaubt das translatorisch bewegliche System während einer ersten Bewegungsphase im freien Betrieb bzw. ungeregelt zu beschleunigen. Mit Hilfe eines Nullkomparators wird ein Umkehrpunkt festlegt, bei dem die Beschleunigungsphase in eine zweite Bewegungsphase, die Bremsphase übergeht. Durch die Umkehrsteuereinrichtung wird in der Beschleunigungsphase weiterhin ein erster Regelkreis geschlossen und dadurch aus einem Soll-Ist-Geschwindigkeitsvergleich ein Regelsignal gewonnen. Dieses wird beim Erreichen des Umkehrpunktes zum Nachregeln der Soll-Geschwindigkeit einem Generator zugeführt. Die so nachgeregelte Soll-Geschwindigkeit wird in einem zweiten Regelkreis mit der Ist-Geschwindigkeit während der Bremsphase verglichen.

Bei der bekannten Anordnung wird somit die Flankensteilheit der Bremskurve für jeden Positioniervorgang geändert, um auf diese Weise zu erreichen, daß das translatorisch bewegliche System über die Zielspur nicht hinausfährt. Nachteilig ist es jedoch, daß die Anordnung zum Regeln der Positionie rung bzw. Verschiebung eines translatorisch beweglichen Systems, sehr aufwendig gestaltet ist. So sind z. B. mehrere Schalter notwendig, um die zwei Regelkreise während der beiden Bewegungsphasen gesteuert durch die ebenfalls sehr aufwendig ausgestaltete Umkehrsteuereinrichtung geöffnet bzw. geschlossen zu halten. Die der bekannten Anordnung als Regelungsprinzip zugrundegelegten Zweiphasenregelung ist hinsichtlich einer minimalen Positionierzeit zwar recht vorteilhaft, jedoch werden dafür regelungstechnische Probleme in Kauf genommen. Diese ergeben sich insbesondere aus dem abrupten Übergang zweier Bewegungsphasen mit entgegengesetzter Wirkung auf das translatorisch bewegliche System.

Der vorliegenden Erfindung liegt daher die Aufgabe zugrunde, ein Verfahren der eingangs genannten Art zu schaffen, mit dem ein Schreib-/Lesekopf ungeachtet verschiedener Positionierdistanzen innerhalb kürzester Zeit und ohne regeltechnische Probleme an einen lokalen Ort auf einem Aufzeichnungsträger exakt positioniert wird.

Diese Aufgabe wird erfindungsgemäß bei einem Verfahren der eingangs genannten Art durch die im Kennzeichen des Hauptanspruches beschriebenen Merkmale gelöst. Dabei wird bei jeder Positionierdistanz, die ein Schreib-/Lesekopf während eines Positioniervorganges zurücklegt, der Positioniervorgang in eine Bremsphase, eine sich daran anschließende kurze Übergangsphase und eine bei einer Übergangsspur einsetzende Bremsphase unterteilt. Mit einer Dreiphasenregelung der genannten Art lassen sich die beschriebenen Mängel bekannter Lösungen vermeiden bzw. beseitigen. Die Lösung zeichnet sich insbesondere dadurch aus, daß für das geschwindigkeitsgeregelte Positionieren des Schreib-/Lesekopfes, ungeach-. tet der jeweiligen Positionierdistanz, nur eine einzige gespeicherte Bremskurve benötigt wird, aus der Soll-Geschwindigkeitswerte für einen Soll-Ist-Geschwindigkeitsvergleich zur Geschwindigkeitsregelung entnommen werden. Um ein Adressieren und Auslesen der gespeicherten Soll-Geschwindigkeitswerte zu ermöglichen, wird unabhängig von dem jeweiligen Bewegungszustand des Schreib-/Lesekopfes bei jedem Spurwechsel ein Adressenvergleich zwischen einer Vergleichs- und einer Ist-Adresse des Schreib-/Lesekopfes vorgenommen.

Die für diesen Vergleich notwendige Vergleichsadresse ergibt sich aus der Übergangsspur, deren Distanz beispielsweise zur Zielspur bei jeder Positionierdistanz einen anderen Wert annimmt. Bei dieser Zählweise ist die Ist-Adresse die Distanz der aktuellen Position des Schreib-/Lesekopfes zur Zielspur. Je nachdem, ob die Ist-Adresse größer, gleich bzw. kleiner als die Vergleichsadresse ist, wird entweder ein bestimmter, unveränderlicher Soll-Geschwindigkeitswert aus der Bremskurve mit der Ist-Geschwindigkeit des Schreib-/Lesekopfes verglichen oder ein mit jedem Spurwechsel abnehmender Soll-Geschwindigkeitswert aus der Bremskurve mit der Ist-Geschwindigkeit verglichen. Auf diese Weise wird die Positionierzeit mit einem Verfahren minimiert, bei dem der regelungstechnische Aufwand für seine Durchführung dennoch so klein wie möglich gehalten wird.

Weiterbildungen der Erfindung werden in einer nachfolgenden Beschreibung eines Ausführungsbeispieles näher erläutert, wobei auf die Zeichnung Bezug genommen wird:

FIG 1 ein Blockdiagramm einer Geschwindigkeitsregelung für einen Schreib-/Lesekopf,

FIG 2 einen Soll-Geschwindigkeits-Zeitverlauf mit einer hilfsweise eingezeichneten, spurbezogene Abzissenachse,

FIG 3 ein Geschwindigkeits-Zeitdiagramm eines "ungeregelten" Schreib-/Lesekopfes mit korrespondierendem zeitlichem Spulenstromverlauf,

FIG 4 ein Geschwindigkeits-Zeitdiagramm eines "geregelten" Schreib-/Lesekopfes mit korrespondierendem zeitlichem Spulenstromverlauf.

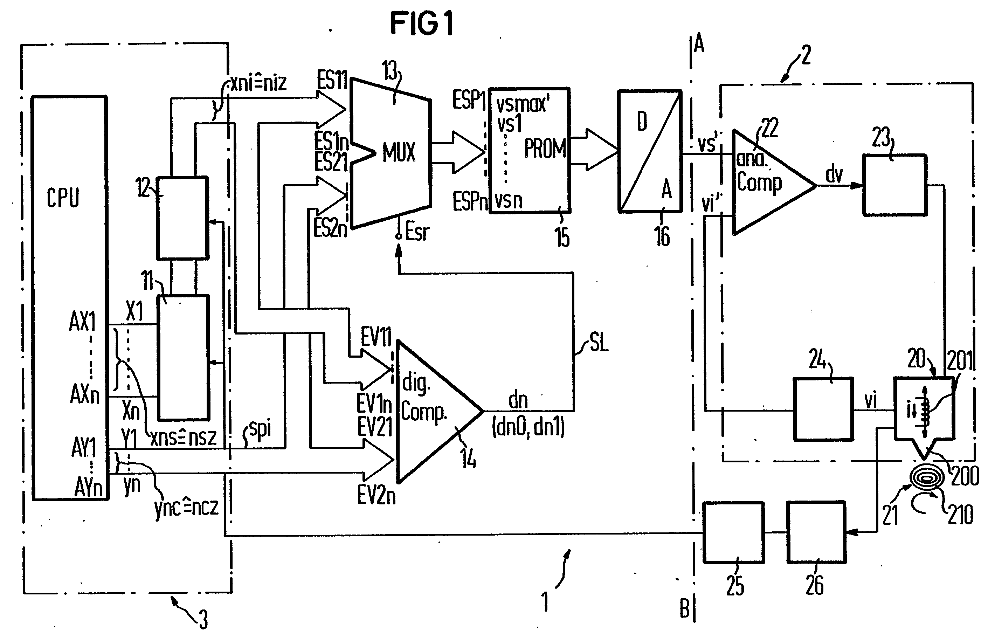

Zum Durchführen eines Verfahrens zum geschwindigkeitsgeregelten, translatorischen Positionieren eines Schreib-/Lesekopfes 200 in bezug auf einen rotierenden Aufzeichnungsträger 21 mit konzentrisch verlaufenden Informationsspuren 210 ist eine Positioniereinrichtung 1 geeignet, wie sie in FIG 1 in einem Blockdiagramm schematisch dargestellt ist. Positioniereinrichtungen für Datenspeicher mit rotierenden Aufzeichnungsträgern sind allgemein bekannt. Es ist daher überflüssig, die dem Fachmann durchaus geläufigen Teile einer derartigen Einrichtung in allen Einzelheiten darzustellen und zu beschreiben. Stattdessen sind in FIG 1 aus Gründen der Übersichtlichkeit und des besseren Verständnisses nur die Funktionsblöcke der Positioniereinrichtung gezeigt, die für die Erfindung wesentlich sind.

Die in FIG 1 schematisch dargestellte Positioniereinrichtung für Schreib-/Leseköpfe 200 ist eine elektronisch gesteuerte mechanische Einrichtung mit einer analogen und digitalen Komponente. Die analoge Komponente in FIG 1, rechts einer Trennungslinie A...B dargestellt, abstrahiert sich zu einem elektronischen Regelkreis 2, bestehend aus einem Antriebssystem 20, mit dem die Schreib-/Leseköpfe 200 translatorisch bewegt werden, einem analogen Komparator 22, einer Stromversorgung 23 für das Antriebssystem und einem Geschwindigkeitswandler 24.

Das Antriebssystem kann als Linear- oder Drehpositionierer ausgebildet sein. Es weist in beiden Fällen einen nicht dargestellten Permanentmagneten zum Erzeugen eines statischen Magnetfeldes auf. Zur Erzeugen eines veränderlichen magnetischen Feldes ist eine Spule 201 des Antriebssystems 20 vorgesehen, die von einem Strom i durchflossen wird, den die Stromversorgung 23 liefert.

Aus der gegenseitigen Beeinflussung der Magnetfleder resultiert die Bewegung des Schreib-/Lesekopfes. Seine Ist-Geschwindigkeit vi wird gemessen und durch den Geschwindig keitswandler 24 in ein elektrisches, der Geschwindigkeit vi entsprechendes Signal vi' umgeformt. Dieses Signal wird an einen Eingang des Komparators 22 gelegt und dort mit einem an einem zweiten Eingang des Komparators angelegten Geschwindigkeitssignal vs' verglichen. Ein sich hieraus ergebendes Fehlersignal dv wird dazu benutzt, den Spulenstrom zu regeln.

Das Geschwindigkeitssignal vs' wird auf digitalem Wege generiert. Dazu weist die digitale Komponente der Positioniereinrichtung, links der Trennungslinie A...B dargestellt, eine Zentraleinheit 10 auf, die mit einem Spurzähler 11 verbunden ist. Die benötigte Anzahl n von ersten Signalleitungen X1...Xn ist abhängig von einer Anzahl N von Informationsspuren 210 auf dem Aufzeichnungsträger 21. Soll nun der Schreib-/Lesekopf von einer Startspur NS auf dem Aufzeichnungsträger zu einer Zielspur NZ bewegt werden, so wird der hierfür notwendige Befehl von einem Steuerwerk der Zentraleinheit 10 über die Signalleitungen X1 bis Xn an den Spurzähler 11 weitergegeben. Der Spurzähler wird dazu zu Beginn des Positioniervorganges mit einer Soll-Adresse xns geladen. Die für jeden Positioniervorgang individuelle Soll-Adresse repräsentiert eine Soll-Positionierdistanz nsz, die der Schreib-/Lesekopf 200 von der Startspur NS bis zur Zielspur NZ zurücklegt. Die dabei vollzogenen Spurwechsel des Schreib-/Lesekopfes werden von einem Spurfolgesystem 26 registriert und von einem Positionswandler 25 in einen jeweils zu den Spurwechseln korrespondierenden Spurimpuls spi umgeformt. Mit diesem Spurimpuls wird sowohl der Spurzähler als auch eine Einspeicher-Kippschaltung 12 taktmäßig angesteuert und dadurch der sich für jeden Spurwechsel neu ergebende Inhalt des Spurzählers an die Einspeicher-Kippschaltung bzw. gleichzeitig an erste Schalteingänge ES11...ES1n eines Multiplexers 13 und an erste Vergleichseingänge EV11...EV1n eines Vergleichers 14 weitergegeben.

Der jeweilige Inhalt des Spurzählers setzt sich aus einer Ist-Adresse xni zusammen, die aus einer sich jeweils verändernden Ist-Positionierdistanz niz für den Schreib-/Lesekopf 200 resultiert. Die Ist-Positionierdistanz bestimmt sich dabei aus der Differenz zwischen einer Ist-Spur NI und der Zielspur NZ. Für jede neue Ist-Spur, die der Schreib-/Lesekopf überquert, wird abschließend der Zählerstand des im Rückwärtsbetrieb arbeitenden Spurzählers um 1 verringert. Am Ende des Zählvorganges, wenn der Schreib-/Lesekopf die Zielspur NZ erreicht hat, steht somit der Zähler auf Null.

Sowohl der Multiplexer als auch der Vergleicher weisen jeweils noch zweite Schalteingänge ES21...ES2n bzw. zweite Vergleichseingänge EV21...EV2n auf, an die zweite Signalleitungen Y1...Yn angeschlossen sind. Auf diesen Signalleitungen wird eine von der Zentraleinheit 10 generierte Vergleichsadresse ync gleichzeitig an den Multiplexer und an den Vergleicher übertragen. Die generierte Vergleichsadresse ergibt sich dabei aus einer Positionierdistanz ncz, die die Distanz zwischen einer Übergangsspur NC und der Zielspur NZ angibt. Die Übergangsspur NC auf dem Aufzeichnungsträger ist die Informationsspur, bei der Schreib-/Lesekopf von einer Beschleunigungsphase v+ in eine Bremsphase v- übergeht.

Der Übergang von der Beschleunigungsphase in die Bremsphase erfolgt zu keinem festgelegten Zeitpunkt, sondern vielmehr an einem Punkt, der von der Soll-Positionierdistanz nsz abhängt. So haben kleinere Soll-Positionierdistanzen eine andere Übergangsspur NC als größere Distanzen. Diese Abhängigkeit zwischen den verschiedenen Soll-Positionierdistanzen und der jeweiligen Übergangsspur, bei der der Schreib-/Lesekopf von der Beschleunigungs- in die Bremsphase übertritt, läßt sich aus folgenden physikalischen Überlegungen ableiten. Für eine beliebig vorgegebene Soll-Positionierdistanz ist es aus der Energiebilanz heraus zweckmäßig, den Schreib-/Lesekopf bis zur Hälfte der Distanz zu beschleunigen und danach wieder kontinuierlich abzubremsen. Vereinfachend erscheint es zulässig, einen linear-proportionalen Zusammenhang mit einer Proportionalitätskonstanten K1 anzusetzen, die im einfachsten Fall in etwa den Wert 0,5 annimmt. Diese Annahmen lassen sich verifizieren, indem man für alle anderen denkbaren Soll-Positionierdistanzen die tatsächlichen Ergebnisse auswertet. Die durch Versuche bestätigte Gesetzmäßigkeit führt im allgemeinen Fall zu folgender Beziehung:

(1) $NC = K1 \times nsz + K2$

Im Interesse einer möglichst minimalen Positionierzeit ist es jedoch wünschenswert, den Bremsvorgang so kurz wie möglich zu halten, mit der Nebenbedingung, den Schreib-/Lesekopf trotzdem genau positionieren zu können. Um diesen Sachverhalt Rechnung zu tragen, wird beispielsweise für K1 ein Wert gewählt, der größer ist als 0,5, vorzugsweise K1 = 9/16. In der Beziehung (1) ist weiterhin eine additive Konstante K2 hinzugeführt. Diese berücksichtigt den statistischen Zusammenhang zwischen der Lage der Übergangsspur NC und der Soll-Positionierdistanz nsz. In vielen Fällen ist es jedoch für eine noch zulässige, vereinfachte Beschreibung des jeweiligen Positioniervorganges ausreichend, K2 zu Null zu setzen.

Die hergeleitete Beziehung wird zugrundegelegt, um in einem Rechenwerk der Zentraleinheit für jede beliebige Soll-Positionierdistanz nsz die zugeordnete Übergangsspur zu berechnen. Bei der Einfachheit dieser Beziehung erscheint es nicht erforderlich, das Rechenwerk und weitere, für die Ausführung von arithmetischen Operationen notwendige Bestandteile der Zentraleinheit im einzelnen zu beschreiben. Die Durchführung derartiger einfacher Berechnungen mit programmgesteuerten Anlagen ist dem Fachmann geläufig und für das Verständnis der Erfindung unwesentlich. Der für jeden Positioniervorgang zunächst ermittelte Wert für die Übergangsspur NC wird in einem ebenfalls nicht dargestellten Register abgespeichert und durch indirekte Adressierung über die Signalleitungen Y1 bis Yn ausgegeben. Somit liegt an den ersten Schalt- und Vergleichseingängen des Multiplexers 13 bzw. des Vergleichers 14 die Ist-Adresse xni und an den zweiten Schalt- und Vergleichseingängen die Vergleichsadresse ync an.

Je nachdem, ob die Ist-Adresse größer oder gleich bzw. kleiner als die Vergleichsadresse ist, wird von dem Vergleicher ein binäres Steuersignal dn mit den Signalzuständen dn1 bzw. dn0 ausgegeben, mit dem der Multiplexer gesteuert wird.

Liegt nun das Steuersignal dn1 an dem Multiplexer an, so wird die Vergleichsadresse ync am zweiten Schalteingang ES21...ES2n des Multiplexers an einen Speichereingang ESP1...ESPn eines programmierbaren Festwertspeichers 15 durchgeschaltet. Wird hingegen der Multiplexer von dem Steuersignal dn0 gesteuert, so wird die Ist-Adresse xni am ersten Schalteingang ES11...ES1n des Multiplexers durchgeschaltet. Mit der jeweils an Speichereingänge ESP1...ESPn des programmierbaren Festwertspeichers anliegenden Vergleichsadresse bzw. Ist-Adresse wird aus diesem ein individueller Maximalwert vsmax′ bzw. ein Soll-Geschwindigkeitswert vs1...vsn ausgelesen und an einen Digital-Analog-Wandler 16 weitergegeben. Die Anzahl der Soll-Geschwindigkeitswerte entspricht dabei im Maximalfall der Anzahl N der Informationsspuren 210 auf dem Aufzeichnungsträger 21. Der individuelle Maximalwert vsmax′ ergibt sich für jeden Positioniervorgang neu. So ist der jeweilige Maximalwert gleich dem Soll-Geschwindigkeitswert vs1...vsn, der zu der Übergangsspur NC korrespondiert. Das umgewandelte, analogisierte Soll-Geschwindigkeitssignal vs′ dient anschließend, wie bereits beschrieben, als Bezugsgröße für den Soll-Ist-Geschwindigkeitsvergleich am Komparator 22.

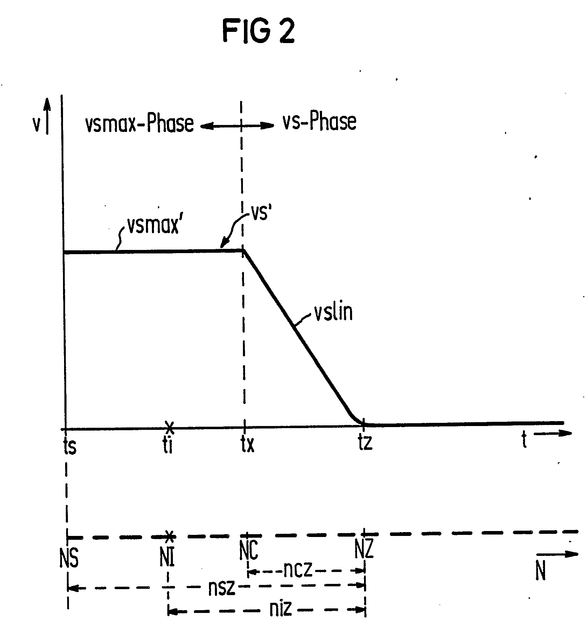

FIG 2 zeigt einen Soll-Geschwindigkeits-Zeitverlauf vs, für den hilfsweise zum Verdeutlichen des Zusammenhanges zwischen der Übergangsspur NC und der Soll-Positionierdistanz nsz auf einer zweiten, mit unterbrochenen Linien gezeichneten Abzissenachse die Anzahl N der Informationsspuren des Aufzeichnungsträgers aufgetragen sind. Der Verlauf, wie er nach dem Umwandeln durch den DA-Wandler vorliegt, ist mit seinen diskreten Werten pro Informationsspur in dem programmierbaren Festwertspeicher 15 gespeichert. Der konstante Anteil des vs′-Verlaufes entspricht dabei dem individuellen Maximalwert vsmax′, während der linear abfallende Teil des vs′-Verlaufes, im folgenden als Bremskurve vslin bezeichnet, sich aus den diskreten Geschwindigkeitswerten zusammensetzt, die kleiner sind als der individuelle Maximalwert. Für die in FIG 2 eingezeichnete Soll-Positionierdistanz nsz ist der Übergang von einer vsmax-Phase zu einer vs-Phase bei der Übergangsspur NC.

So wird aufgrund der vorangegangenen Erläuterungen zu FIG 1 für die Ist-Positionierdistanz niz, die größer gleich als die Distanz ncz zwischen der Übergangsspur NC und der Zielspur NZ ist, der individuelle Maximalwert vsmax′ an den Regelkreis 2 gelegt. Erst wenn die Ist-Positionierdistanz niz kleiner der Distanz ncz ist, ändert sich mit jeder Informationsspur, die von dem Schreib-/Lesekopf 200 überquert wird, der Soll-Geschwindigkeitswert vs′ an dem Komparator 22.

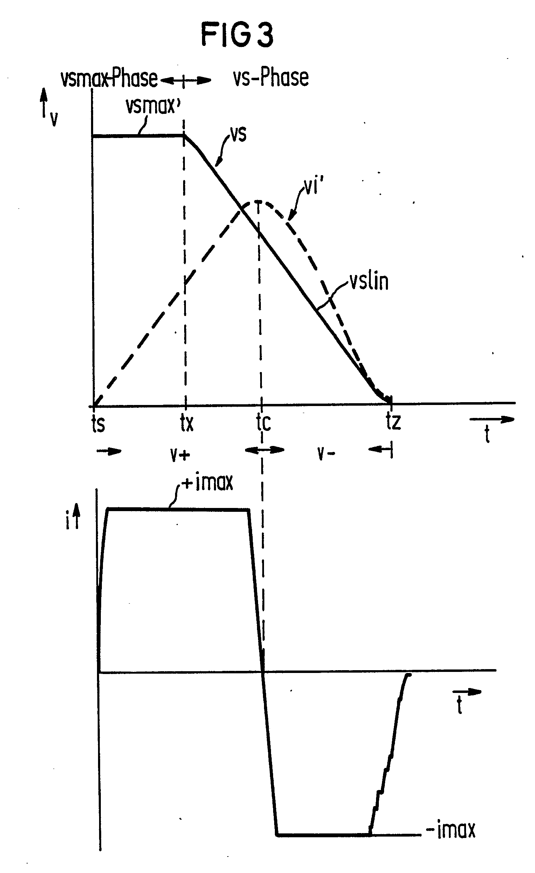

FIG 3 zeigt für einen "ungeregelten" Positioniervorgang einen zeitlichen Soll-/Ist-Geschwindigkeitsverlauf mit korrespondierendem Spulenstrom i. Die Darstellung in FIG 3 veranschaulicht die physikalischen Vorgänge in dem Regelkreis 2. Zu einem Startzeitpunkt ts, bei den sich der Schreib-/Lesekopf 200 über der Startspur NS befindet, wird die Spule mit einem positiven Spulenstrom i gespeist. Zur gleichen Zeit, in der der Schreib-/Lesekopf beschleunigt wird, wird bis zu einem Soll-Übergangszeitpunkt tx, also während der vsmax-Phase, ein maximaler Soll-Geschwindigkeitswert vsmax an den Eingang des Komparators gelegt.

Kennzeichnend für den in FIG 3 dargestellten, ungeregelten Positioniervorgang ist das schlechte Einschwingverhalten des gemessenen Ist-Geschwindigkeitsverlaufes vi′ bezogen auf den Soll-Geschwindigkeitsverlauf vs′ für Zeiten t größer als einem Ist-Übergangszeitpunkt tc. So kann der Schreib-/ Lesekopf aufgrund des vorgegebenen Soll-Geschwindigkeitsverlaufes vs' und der Sättigungseigenschaft der Spule innerhalb einer zur Verfügung stehenden Bremszeit tz-tc nicht mehr auf die Zielspur NZ positioniert werden.

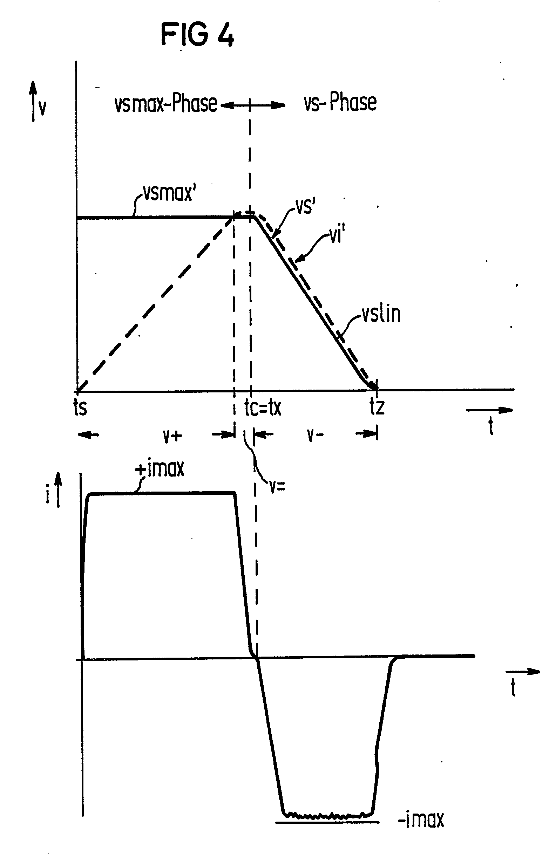

Im Gegensatz zu FIG 3 zeigt die FIG 4 einen zeitlichen Soll-Ist-Geschwindigkeitsverlauf von einem "geregelten" Positioniervorgang. Der wesentliche Unterschied zum ungeregelten Fall, wie er in FIG 3 dargestellt ist, besteht darin, daß die vsmax-Phase bis zu dem Ist-Übergangszeitpunkt tc anhält und somit der Dauer der Beschleunigungsphase v + und einer Übergangsphase v = des Schreib-/Lesekopfes 200 identisch ist. Gleiches gilt in diesem Fall für die vs-Phase und die Bremsphase v-. Durch das Verwenden des individuellen Maximalwertes vsmax' statt des maximalen Soll-Geschwindigkeitswertes vsmax für die Geschwindigkeitsregelung wird die vsmax-Phase ausgedehnt und damit ein weitaus besseres Einschwingverhalten des Ist-Geschwindigkeitsverlaufes vi' an den Soll-Geschwindigkeitsverlauf vs' erzielt. Außerdem ist ein genaues Positionieren des Schreib-/Lesekopfes über der Informationsspur NC innerhalb der dafür vorgesehenen Bremszeit tz-tc möglich, ohne daß die Spule bei einem Strom -imax in die Sättigung getrieben wird.

Das beschriebene Verfahren hat den Vorteil, für unterschiedliche Positionierdistanzen beim Positionieren eines Schreib-/Lesekopfes in bezug auf einen Aufzeichnungsträger nur eine Bremskurve zu erfordern. Gegenüber einem Verfahren, bei dem mehrere Bremskurven benötigt werden, bedarf es bei dem beschriebenen Verfahren eines wesentlich geringeren Speicherplatzes. Darüber hinaus bietet das Verfahren die Möglichkeit, trotz der Verwendung einer einzigen Bremskur ve, das Positionieren des Schreib-/Lesekopfes mit einer größtmöglichen Bremsleistung durchzuführen. Dies macht sich, wie bereits erwähnt, in einer kleineren Positionierzeit bzw. Zugriffszeit bemerkbar. Für den Fachmann ist es aus der vorstehenden Erläuterung des Ausführungsbeispieles der Erfindung naheliegend, daß im Rahmen der offenbarten technischen Lehre durchaus Ausgestaltungen möglich sind, die sich auf jegliche Arten von Aufzeichnungsträgern beziehen; z.B. magnetische, optische, magneto-optische Speicherplatten, Floppy-Discs. So ist es insbesondere nicht erforderlich, daß die verwendeten Aufzeichnungsträger für das beschriebene Verfahren konzentrische Informationsspuren aufweisen. Das Verfahren läßt sich beispielsweise auch für spiralförmig angeordnete Pit-Strukturen auf optische Speicherplatten anwenden. Neben den genannten Ausgestaltungen ist es für den Fachmann aber gleichfalls vorstellbar, daß das geschwindigkeitsgeregelte Positionieren des Schreib-/Lesekopfes im Rahmen der offenbarten technischen Lehre vollständig mikroprogrammgesteuert abläuft, indem auch der Adressenvergleich und die Adressenauswahl für den Festwertspeicher mit Hilfe eines Mikroprogrammes durchgeführt wird.

## Ansprüche

1. Verfahren zum geschwindigkeitsgeregelten Positionieren eines Schreib-/Lesekopfes in bezug auf einen rotierenden Aufzeichnungsträger, bei dem bei einem aus einer Beschleunigungsphase (v +) und einer Bremsphase (v-) bestehenden Positioniervorgang aus einer Soll-Positionierdistanz (nsz) zwischen einer Startspur (NS) und einer jeweiligen Zielspur (NZ) auf dem Aufzeichnungsträger (21) eine individuelle, den Übergang von Beschleunigungs- in Bremsphase bestimmende Übergangsspur (NC) ermittelt wird und bei dem bei jedem Spurwechsel durch einen Spurimpuls (spi) eine Ist-Spur (NI) bestimmt wird, bei der bis zum Erreichen der Übergangsspur, wenn die Ist-Spur gleich der Übergangsspur ist, ein Schreib-/Lesekopf (200) maximal beschleunigt wird und in der Bremsphase ein Ist-Geschwindigkeitswert (vi') mit einem in einem programmierbaren Festwertspeicher (15) abgelegten Soll-Geschwindigkeitswert (vs1... vsn) einer Bremskurve derart verglichen wird, daß die Ist-Geschwindigkeit des Schreib-/Lesekopfes beim Erreichen der Zielspur gleich Null ist, **gekennzeichnet durch** die folgenden Verfahrensschritte:

a) mit der aus dem Abstand zwischen Start- und Zielspur sich ergebenden Soll-Positionierdistanz (nsz) wird eine Vergleichsadresse (ync) gebildet, die dem höchstens der halben Soll-Positionierdistanz entsprechenden Abstand zwischen der Übergangsspur (NC) und der Zielspur (NZ) entspricht,

b) bei jedem Spurwechsel während der Beschleunigungsphase (v +) wird die Vergleichsadresse (ync) mit einer aus einer verbleibenden Ist-Positionierdistanz (niz) zwischen der Ist-Spur (NI) und der Zielspur (NZ) gebildeten Ist-Adresse (xni) verglichen und, solange die Vergleichsadresse kleiner als die Ist-Adresse bzw. gleich der Ist-Adresse ist, mit dieser Vergleichsadresse der programmierbare Festwertspeicher (15) adressiert und damit ein der Vergleichsadresse zugeordneter individueller Maxi malwert (vsmax') aus den gespeicherten Soll-Geschwindigkeitswerten (vs1...vsn) ausgelesen, und

c) bei einer gegenüber der Ist-Adresse (xni) größeren Vergleichsadresse (ync) wird für jeden Spurwechsel während der Bremsphase (v-) der programmierbare Festwertspeicher (15) mit der Ist-Adresse adressiert und damit aus dem adressierten Speicherplatz ein individuell zugeordneter Soll-Geschwindigkeitswert (vs1...vsn) ausgelesen.

2. Positioniereinrichtung zur Durchführung des Verfahrens nach Anspruch 1, **dadurch gekennzeichnet,** daß ein Adressengenerator (3) mit ersten Adreßausgängen (AX1...AXn) und zweiten Andreßausgängen (AY1...AYn), ein Schaltelement (13) mit ersten Schalteingängen (ES11...ES1n) und zweiten Schalteingängen (ES21...ES2n) und ein Vergleichsmodul (14) mit ersten Vergleichseingängen (EV11...EV1n) und zweiten Vergleichseingängen (EV21...EV2n) vorgesehen sind und der programmierbare Festwertspeicher (15) Speichereingänge (ESP1...ESPn) aufweist, daß die ersten Adreßausgänge über erste Signalleitungen (X1...Xn), die die Ist-Adresse (xni) führen, mit den ersten Schalteingängen und den ersten Vergleichseingängen und die zweiten Adreßausgänge über zweite Signalleitungen (Y1...Yn), die die Vergleichsadresse (ync) führen, mit den zweiten Schalteingängen und den zweiten Vergleichseingängen verbunden sind, daß das Vergleichsmodul (14) mit einem Steuereingang (Esr) des Schaltelementes (13) über eine Steuerleitung (SL) verbunden ist, die ein binäres Steuersignal (dn) führt, dessen Signalzustände (dn1 bzw. dn0) von dem Adressenvergleich im Vergleichsmodul abhängig sind und eine der beiden, dem Schaltelement angebotenen Adressen selektiert und daß das Schaltelement mit den Speichereingängen (ESP1...ESPn) des programmierbaren Festwertspeichers (15) verbunden ist, so daß ein zugeordneter, in dem programmierbaren Festwertspeicher gespeicherter Soll-Geschwindigkeitswert (vs1...vsn) adressierbar und auslesbar ist.

FIG 1

EP 0 321 886 A1

FIG 2

FIG 3

# FIG 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | IBM TECHNICAL DISCLOSURE BULLETIN, Band 26, Nr. 3B, August 1983, Seiten 1741-1742, New York, US; D.H. PENNINGTON et al.: "Digital velocity reference curve anticipator" * Insgesamt * --- | 1,2 | G 11 B 21/08 |
| Y | US-A-4 622 604 (Y. HASHIMOTO) * Spalte 4, Zeile 4 - Spalte 6, Zeile 34; Figuren 3,4 * --- | 1,2 | |
| A | EP-A-0 007 638 (SIEMENS) * Ansprüche; Figuren * --- | 1,2 | |
| A | US-A-4 491 776 (J. VEALE) * Spalte 7, Zeile 7 - Spalte 10, Zeile 20; Figuren * --- | 1,2 | |
| A | US-A-3 729 668 (Y.-J. BRETTE) * Spalte 2, Zeilen 22-64; Figuren * --- | 1,2 | RECHERCHIERTE SACHGEBIETE (Int. Cl.4) |
| A | FR-A-2 125 852 (IBM) --- | | G 11 B |
| A | FR-A-2 172 733 (PHILIPS) --- | | G 05 B |
| D,A | FR-A-2 258 661 (HONEYWELL BULL) ----- | | |

Der vorliegende Recherchenbericht wurde für alle Patentansprüche erstellt

| Recherchenort | Abschlußdatum der Recherche | Prüfer |
|---|---|---|
| DEN HAAG | 16-03-1989 | DEVERGRANNE C.A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument